# EUROPÄISCHE PATENTSCHRIFT

(11) **EP 2 939 964 B1**
(45) Veröffentlichungstag und Bekanntmachung des Hinweises auf die Patenterteilung: **28.06.2017**
(21) Anmeldenummer: 15156463.0
(22) Anmeldetag: 25.02.2015
(51) Int. Cl.: B65G 57/22, B65G 47/66

(54) **SCHIEBEVORRICHTUNG FÜR EINE PALETTIERVORRICHTUNG MIT EINER DREIDIMENSIONALEN OBERFLÄCHENSTRUKTUR**
SLIDING DEVICE FOR A PALLETISING DEVICE WITH A 3D UPPER SURFACE
DISPOSITIF DE POUSSÉE POUR UN DISPOSITIF DE PALETTISATION AVEC UNE SURFACE SUPÉRIEURE TRIDIMENSIONNELLE

(30) Priorität: 28.04.2014 DE 102014105930
(43) Veröffentlichungstag der Anmeldung: 04.11.2015
(73) Patentinhaber: Windmöller & Hölscher KG, 49525 Lengerich (DE)
(72) Erfinder: Ahlers, Ralf, 49525 Lengerich (DE); Steinberg, Jürgen, 48477 Hörstel (DE); Kölker, Martin, 49477 Ibbenbüren (DE)

(56) Entgegenhaltungen:
- EP-A1- 1 437 458
- GB-A- 620 724
- GB-A- 897 835
- JP-A- H01 252 421
- JP-A- S52 137 866
- US-A- 4 214 848

## Beschreibung

Die vorliegende Erfindung betrifft eine Schiebevorrichtung für eine Palettiervorrichtung zum Stapeln gefüllter Säcke zu einem Sackstapel.

Es ist grundsätzlich bekannt, dass Palettiervorrichtungen eingesetzt werden, um einzelne gefüllte Säcke zu einem Sackstapel aufzustapeln. Dies dient der besseren Transportierbarkeit sowie einer verbesserten Lagerfähigkeit der gefüllten Säcke. Hierfür werden üblicherweise einzelne Lagen ausgebildet, welche zwei oder mehr Reihen der gefüllten Säcke aufweisen können. Die einzelnen Lagen werden aufeinandergeschichtet, um den Sackstapel auszubilden.

Für das Ausbilden der jeweiligen Lage ist üblicherweise in der Palettiervorrichtung eine Schiebevorrichtung vorgesehen. Die Schiebevorrichtung weist eine Schiebefläche und einen Schiebetisch auf, wobei auf der Schiebefläche die Lagen ausgebildet werden. Nach dem Ausbilden der jeweiligen Lage erfolgt eine Bewegung dieser Lage von der Schiebefläche mittels eines Schiebers auf den benachbarten Schiebetisch. Diese Bewegung ist üblicherweise quer zur Zufuhrbewegung und der gefüllten Säcke von einer separaten Zufuhrvorrichtung. So erfolgt üblicherweise ein seitliches Zuführen der gefüllten Säcke und ein gerades Abschieben der Lage der gefüllten Säcke auf den Schiebetisch.

Nachteilhaft bei den bekannten Vorrichtungen ist es, dass für die Bewegung der Lage mittels des Schiebers auf den Schiebetisch eine hohe Reibungskraft überwunden werden muss. So weisen die gefüllten Säcke eine große Kontaktfläche mit der Schiebefläche auf, so dass eine hohe Reibungsfläche mit der entsprechend üblicherweise hohen Gewichtskraft der gefüllten Säcke zu einer hohen Widerstandskraft durch Reibung führt. Dies kann zu hohem Verschleiß oder sogar zum Beschädigen der gefüllten Säcke während des Schiebevorgangs führen. Bekannte Lösungen, wie z. B. eine Antihaftbeschichtung oder ein aufwendiges Luftpolster, sind nicht in der Lage, die Nachteile gänzlich zu beheben. So sind Antihaftbeschichtungen nur temporär einsetzbar, da sie aufgrund der hohen Reibung ebenfalls einem hohen Verschleiß unterliegen. Das Ausbilden eines aktiven Luftpolsters hingegen ist mit einem sehr hohen konstruktiven Aufwand verbunden, so dass hier weder der Platz noch der Kostenfaktor in ausreichender Weise Berücksichtigung findet. Eine Schiebevorrichtung nach dem Oberbegriff des Anspruchs 1 ist ebenfalls in der JP S52 137866 A offenbart.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise den Schiebevorgang zwischen dem Schiebetisch und der Schiebefläche zu erleichtern.

Voranstehende Aufgabe wird gelöst durch eine Schiebevorrichtung mit den Merkmalen des Anspruchs 1.

Eine erfindungsgemäße Schiebevorrichtung für eine Palettiervorrichtung zum Stapeln gefüllter Säcke zu einem Sackstapel weist eine Schiebefläche auf. Neben der Schiebefläche ist ein Schiebetisch angeordnet. Weiter ist ein Schieber vorgesehen für ein Schieben der Säcke von der Schiebefläche auf den Schiebetisch. Die Schiebefläche weist zumindest einen Strukturabschnitt mit einer dreidimensionalen Oberflächenstruktur zur Reduktion der Reibung beim Schieben der Säcke auf. Eine erfindungsgemäße Schiebevorrichtung basiert also grundsätzlich auf bekannten Schiebevorrichtungen. Insbesondere besteht auch hier die Aufteilung in eine Schiebefläche, auf welcher die jeweilige Lage aus den einzelnen gefüllten Säcken bzw. den Reihen der Säcke ausgebildet wird, und einem Schiebetisch, welcher anschließend für das Aufschichten zuständig ist. Über eine Zufuhrvorrichtung werden also auch bei einer erfindungsgemäßen Schiebevorrichtung die gefüllten Säcke zum Ausbilden der Lage seitlich auf die Schiebefläche zugeführt. Sobald die Lage ausgebildet ist, wird mithilfe des Schiebers diese fertige Lage der gefüllten Säcke auf den Schiebetisch geschoben. Anschließend kann sich der Schiebetisch öffnen, so dass die ausgebildete Lage sich auf eine Hubvorrichtung bzw. eine bereits fertiggestellte und aufgeschichtete Lage unterhalb des Hubtisches absenken kann. Über die Hubvorrichtung kann wiederum der sich ausbildende Sackstapel nach unten bewegt werden, so dass sich der Schiebetisch wieder schließen kann. Anschließend beginnt der Vorgang von Neuem.

Durch eine erfindungsgemäße Schiebevorrichtung wird nun die Bewegung der Lage zwischen der Schiebefläche und dem Schiebetisch verbessert. Die Schiebefläche ist mit einem Strukturabschnitt ausgebildet, welche eine dreidimensionale Oberflächenstruktur aufweist. Diese dreidimensionale Oberflächenstruktur dient der Funktion der Reduktion der Reibung beim Schieben. Unter einer dreidimensionalen Oberflächenstruktur ist dabei eine Oberfläche des Strukturabschnittes zu verstehen, welche z. B. durch Erhebungen oder Vertiefungen eine dreidimensionale Ausprägung aufweist. So kann diese Oberflächenstruktur auch als erhöhende oder vertiefende Oberflächenstruktur verstanden werden. In Summe führt dies dazu, dass im Vergleich zu einer ebenen Kontaktfläche die Summe der Kontaktflächen zwischen einem darüber hinabgleitenden gefüllten Sack und dieser dreidimensionalen Oberflächenstruktur deutlich reduziert wird. Ist bspw. die dreidimensionale Oberflächenstruktur in Form von Erhöhungen ausgebildet, so werden die gefüllten Säcke den Strukturabschnitt nur im Bereich der Erhöhungen und nicht in den Tälern zwischen den Erhöhungen berühren. Damit reduziert sich die Kontaktfläche, wodurch sich dementsprechend auch die Widerstandskraft durch Reibung reduziert. Wird dagegen die dreidimensionale Oberflächenstruktur z. B. durch Vertiefungen ausgebildet, so wird während des Schiebevorgangs ein gefüllter Sack den Strukturabschnitt in den Vertiefungsbereichen gerade nicht berühren. In gleicher Weise ergibt sich also auch hier die Möglichkeit einer Reduktion der Kontaktfläche und damit eine Reduktion der Widerstandskraft durch Reibung.

Neben der reinen Reduktion der Kontaktfläche und der bereits damit einhergehenden Reduktion der Reibungswirkung während des Schiebevorganges wird auch ein statisches und damit passives Luftpolster erzeugt. Während bei bekannten Lösungen in aktiver Natur Luft eingeblasen wird, um durch entsprechende Öffnungen ein Anschweben oder Aufschweben der gefüllten Säcke zu gewährleisten, wird durch die dreidimensionale Oberflächenstruktur gemäß der vorliegenden Erfindung sozusagen automatisch ein passives bzw. statisches Luftpolster gewährleistet. Aufgrund der Tatsache, dass in Talbereichen zwischen Erhebungen der dreidimensionalen Oberflächenstruktur bzw. in entsprechenden Vertiefungen keinerlei Kontakt zum gefüllten Sack während des Schiebevorgangs besteht, sondern vielmehr dort ein leeres Volumen mit Luft gefüllt verbleibt, kann dort ein Anhaften besonders wirksam vermieden werden. Damit kann sozusagen ein statisches Luftpolster zusätzlich zur Reibungsreduktion durch die Reduktion der Kontaktfläche ein erleichtertes Schieben gewährleisten.

In Summe führt eine erfindungsgemäße Ausbildung des Strukturabschnittes nun dazu, dass der Schiebevorgang mit weniger Widerstandskraft erfolgen kann. Zum einen führt dies zu einem geringeren Verschleiß des Strukturabschnittes selbst und damit der Schiebefläche. Weiter kann ein geringerer Kraftaufwand mit einer kleineren und damit kostengünstigeren Antriebsvorrichtung für den Schieber einhergehen. Nicht zuletzt erfolgt der Schiebevorgang nun auch in schonenderer Weise, so dass die Oberfläche der gefüllten Säcke mit geringerer mechanischer Beeinträchtigung während des Schiebevorgangs belastet wird. Auch ein lokales Anhaften, insbesondere während Pausen im Schiebevorgang, wird durch die beschriebenen statischen bzw. passiven Luftpolster wirksam vermieden.

Der Strukturabschnitt ist dabei in einem Bereich vorgesehen, in welchem die gefüllten Säcke eine Bewegung während des Schiebevorgangs durchführen. Bevorzugt ist es demnach, wenn der gesamte Bewegungsbereich, über welchen die gefüllten Säcke während des Schiebevorgangs von der Schiebfläche auf den Schiebetisch gleiten, mit einem entsprechenden Strukturabschnitt versehen ist. Wie später noch erläutert werden wird, kann vorzugsweise auch der Schiebetisch entsprechende Strukturabschnitte aufweisen. Bevorzugt ist es demnach auch, wenn der Strukturabschnitt oder die Strukturabschnitte eine Breite aufweisen, die der maximalen Breite der sich ausbildenden Lage der gefüllten Säcke entspricht. Mit anderen Worten kann die Schiebefläche einen Schiebeabschnitt aufweisen, welcher der Schiebebewegung entspricht, so dass dieser Schiebeabschnitt im Wesentlichen vollständig als Strukturabschnitt ausgebildet ist.

Es kann vorteilhaft sein, wenn bei einer erfindungsgemäßen Schiebevorrichtung der zumindest eine Strukturabschnitt sich über die gesamte Schiebebreite erstreckt. Darunter ist zu verstehen, dass auf einer Schiebefläche unterschiedlich große Lagen ausgebildet werden können. Hinsichtlich der Translationsbewegungsrichtung während des Schiebevorgangs und quer zu dieser Richtung kann die Schiebebreite dahingehend verstanden werden, dass bei maximaler Breite der Lage der gefüllten Säcke die Schiebebreite notwendig ist, um den Schiebevorgang durchzuführen. Erstreckt sich nun der Strukturabschnitt in erfindungsgemäßer Weise über die gesamte Schiebebreite, so kann auch über die gesamte Schiebebreite die entsprechende Reduktion der Widerstandskraft zur Verfügung gestellt werden. Die erfinderischen Vorteile gelangen demnach über die gesamte Schiebebreite zur Wirkung. Bevorzugt ist es auch, wenn der Strukturabschnitt nicht nur über die gesamte Schiebebreite, sondern auch über die gesamte oder im Wesentlichen die gesamte Schiebelänge die Erstreckung aufweist, um auch über den gesamten Wegabschnitt des Schiebevorgangs die Vorteile der vorliegenden Erfindung gewährleisten zu können.

Ein weiterer Vorteil ist erzielbar, wenn bei einer erfindungsgemäßen Schiebevorrichtung der Schiebetisch zumindest einen Strukturabschnitt aufweist. Wie bereits erläutert worden ist, wird zumindest ein Teil des Schiebevorgangs für einen Teil der gefüllten Säcke der Lage auch auf dem Schiebetisch stattfinden. Der Schiebetisch selbst weist dementsprechend vorzugsweise ebenfalls einen Strukturabschnitt auf. Selbstverständlich kann auch ein Teil des Schiebetisches als Schiebefläche ausgebildet sein, so dass auch nur der Schiebetisch einen entsprechenden Strukturabschnitt aufweisen kann. Die Vorteile der Ausbildung des Strukturabschnitts im Bereich des Schiebetisches sind identisch mit den beschriebenen Vorteilen zur Schiebefläche. Bevorzugt ist es, wenn auf allen Abschnitten, welche während des Schiebevorgangs als Kontaktfläche zu den geschobenen Säcken fungieren, ein entsprechender Strukturabschnitt vorgesehen ist.

Vorteilhaft ist es ebenfalls, wenn bei einer erfindungsgemäßen Schiebevorrichtung die Schiebefläche wenigstens ein Schiebeband aufweist, wobei der zumindest eine Strukturabschnitt benachbart in Schieberichtung des Schiebers neben dem Schiebeband angeordnet ist. Da bekannterweise eine Zufuhr üblicherweise von der Seite erfolgt, müssen die gefüllten Säcke von einer Zufuhrposition noch in eine Schiebeposition bewegt werden. Hierfür kann in der Schiebevorrichtung ein Schiebeband verwendet werden, welches einen Teil der Schiebefläche ausbildet. Selbstverständlich ist es denkbar, dass auch das Schiebeband selbst einen entsprechenden Strukturabschnitt aufweist bzw. als Strukturschiebeband ausgebildet ist. Jedoch ist es wichtig, dass bei dieser Ausführungsform der vorliegenden Erfindung der zumindest eine Strukturabschnitt benachbart, insbesondere direkt benachbart in Schieberichtung des Schiebers neben dem Schiebeband angeordnet ist. Beginnt nun der Schiebevorgang, so bewegt der Schieber die gefüllten Säcke vom Schiebeband herunter auf den benachbarten Strukturabschnitt. In diesem Strukturabschnitt tritt nun direkt die erfindungsgemäße Wirkung der reduzierten Widerstandskraft ein, so dass die erfindungsgemäßen Vorteile sofort für den Schiebevorgang ihre Wirkung zeigen. Selbstverständlich können auch zwei oder mehr Schiebebänder vorgesehen sein, wenn zwei oder mehr Zufuhrbänder in der Zufuhrvorrichtung eingesetzt werden sollen. Die Übergänge zwischen dem jeweiligen Schiebeband und dem Strukturabschnitt können dabei selbstverständlich geglättet ausgebildet sein, so dass insbesondere eine Überlappung in diesem Bereich eine Spaltbildung vermeidet. Erfindungsgemäß weist der zumindest eine Strukturabschnitt Erhebungen und/oder Vertiefungen auf, insbesondere in geprägter Weise. Wie bereits erläutert worden ist, handelt es sich bei Erhebungen und/oder Vertiefungen um vorteilhafte Ausführungsformen der dreidimensionalen Oberflächenstruktur. Eine prägende Ausbildung kann insbesondere durch eine Kaltverformung zur Verfügung gestellt werden. Die geprägte Weise ist also eine besonders einfache und kostengünstige Herstellmöglichkeit für den Strukturabschnitt. Dabei kann der Strukturabschnitt separat oder auch einstückig mit der Schiebefläche z. B. aus einem Metallblech ausgebildet werden.

Ein weiterer Vorteil wird erzielt, indem bei der erfindungsgemäßen Schiebevorrichtung der zumindest eine Strukturabschnitt eine Vielzahl von Strukturelementen aufweist, welche eine gleiche oder im Wesentlichen gleiche Ausrichtung aufweisen. Darunter ist zu verstehen, dass sozusagen eine Führungsfunktionalität zur Verfügung gestellt wird. Die Ausrichtung erfolgt vorzugsweise entlang der Schieberichtung. So können die einzelnen Strukturelemente eine längliche Form aufweisen, welche mit ihrer Haupterstreckungsrichtung mit der Schieberichtung übereinstimmen. Auch eine Querausrichtung ist denkbar, um eine entsprechend weitere Reduktion und vor allem ein unerwünschtes Abgleiten der gefüllten Säcke zu verhindern. Die Führungsfunktionalität dient jedoch insbesondere dazu, ein seitliches Ausbrechen der gefüllten Säcke zu vermeiden, so dass nach Ausbilden der jeweiligen Lage auf der Schiebefläche die Lageposition relativ zueinander für die einzelnen gefüllten Säcke auch mit höherer Wahrscheinlichkeit beibehalten werden kann. Die jeweilige Prägestelle und damit die jeweilige Erhöhung und/oder die jeweilige Vertiefung kann dabei als jeweils ein Strukturelement verstanden werden. Darüber hinaus sind bei einer erfindungsgemäßen Schiebevorrichtung die Vielzahl von Strukturelementen zueinander in Schieberichtung des Schiebers versetzt angeordnet. Mit anderen Worten sind erfindungsmäßig die einzelnen Strukturelemente quer zur Schieberichtung in Reihen ausgeführt sein, wobei die nachfolgende Reihe einen Versatz in Schieberichtung aufweist. Dies führt dazu, dass die einzelnen Reihen in Schieberichtung miteinander überlappen und damit ein Absenken des gefüllten Sackes beim Gleiten über die Strukturelemente besonders wirksam vermieden wird. Der Versatz in Schieberichtung ist dabei vorzugsweise im Bereich von ca. der Hälfte der länglichen Ausrichtung der Strukturelemente ausgebildet, so dass ein im Wesentlichen immer gleicher Kontakt zwischen allen Strukturelementen und dem jeweils gefüllten Sack bestehen bleibt, während der Schiebevorgang durchgeführt wird.

Ebenfalls von Vorteil kann es sein, wenn bei einer erfindungsgemäßen Schiebevorrichtung die Vielzahl von Strukturelementen unterschiedliche Strukturhöhen aufweisen. Damit kann eine Welligkeit erzeugt werden, die in definierten Abschnitten eine Reduktion oder auch eine definierte und gewollte Steigerung der Widerstandskraft zur Verfügung stellt. Damit kann sozusagen die Schiebegeschwindigkeit in geometrischer und konstruktiver Weise beeinflusst werden. Insbesondere wird jedoch durch die Welligkeit ein zusätzliches Luftpolster ausgebildet, welches in statischer Weise zwischen den einzelnen höheren Strukturhöhen die Reibungskraft und damit die Widerstandskraft weiter reduziert.

Ebenfalls vorteilhaft ist es, wenn bei einer erfindungsgemäßen Schiebevorrichtung der zumindest eine Strukturabschnitt als separate Strukturplatte der Schiebefläche ausgebildet ist. Dies führt zu mehreren Vorteilen. So ist eine separate Strukturplatte auch separat von der Schiebefläche herstellbar und kann dementsprechend kostengünstiger und einfacher produziert werden. Auch kann eine Strukturplatte in separater Ausführungsform in der Schiebefläche eingesetzt und vor allem ausgetauscht werden, so dass bei erkennbarem Verschleiß über die Nutzungsdauer ein Austausch dieses Verschleißteils möglich ist. In der Montage ist ebenfalls eine Reduktion des Aufwandes erkennbar, da die geometrischen Abmessungen der Schiebefläche nun unabhängig von der Strukturplatte ausbildbar sind.

Ein weiterer Vorteil kann es sein, wenn bei einer erfindungsgemäßen Schiebevorrichtung zwischen der Schiebefläche und dem Schiebetisch ein Höhenversatz besteht, welcher insbesondere stufenweise durch den zumindest einen Strukturabschnitt überwunden wird. Ein Höhenversatz in Schieberichtung nach unten dient dazu, sozusagen stufenweise den Schiebevorgang zu unterstützen. Da auf diese Weise zusätzlich ein Überlappen der einzelnen Stufen möglich wird, können Spaltbildungen zwischen den einzelnen Stufen wirksam vermieden werden und damit eine Klemm- oder Quetschgefahr für die gefüllten Säcke fast ausgeschlossen werden. Die Überwindung des Höhenversatzes erfolgt dabei insbesondere durch den Strukturabschnitt, welcher bevorzugt als separate Strukturplatte bei dieser Ausführung ausgebildet ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform eines Sackstapels während des Stapelns,
- Fig. 2: eine Draufsicht auf eine Palettiervorrichtung mit einer erfindungsgemäßen Schiebevorrichtung,
- Fig. 3: die Ausführungsform der Fig. 2 in einem weiteren Schiebezustand,
- Fig. 4: eine Ausführungsform eines Strukturabschnitts,
- Fig. 5: eine weitere Ausführungsform eines Strukturabschnitts,
- Fig. 6: eine weitere Ausführungsform eines Strukturabschnitts,
- Fig. 7: eine Ausführungsform eines Strukturabschnitts einer erfindungsgemäßen Schiebevorrichtung und
- Fig. 8: eine seitliche Darstellung einer Schiebevorrichtung.

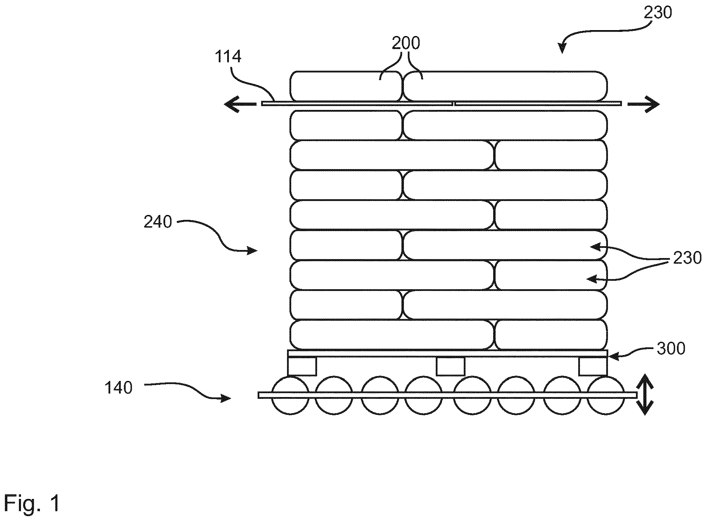

In Fig. 1 ist schematisch dargestellt, wie der Stapelvorgang eines Sackstapels 240 erfolgen kann. So kann auf einer Hubvorrichtung 140 eine Palette 300 angeordnet sein. Auf dieser Palette 300 sind bereits eine Vielzahl von Lagen 230 angeordnet, welche Teil des sich ausbildenden Sackstapels 240 sind. Eine weitere aufzuschichtende Lage 230 der gefüllten Säcke 200 befindet sich noch oberhalb auf dem Schiebetisch 114. Der Schiebetisch 114 ist geteilt und kann sich entlang der beiden Pfeile nach außen hin öffnen, so dass die dort angeordnete Lage 230 der gefüllten Säcke absinken kann und in Kontakt mit dem Sackstapel 240 gelangt. Anschließend wird mithilfe der Hubvorrichtung 140 der gesamte Sackstapel 240 nun mit der neuen obersten Lage 230 zumindest um die Sackbreite abgesenkt, so dass sich der Schiebetisch 114 wieder schließen kann. Anschließend kann der Schiebetisch die nächste Lage 230 der gefüllten Säcke aufnehmen.

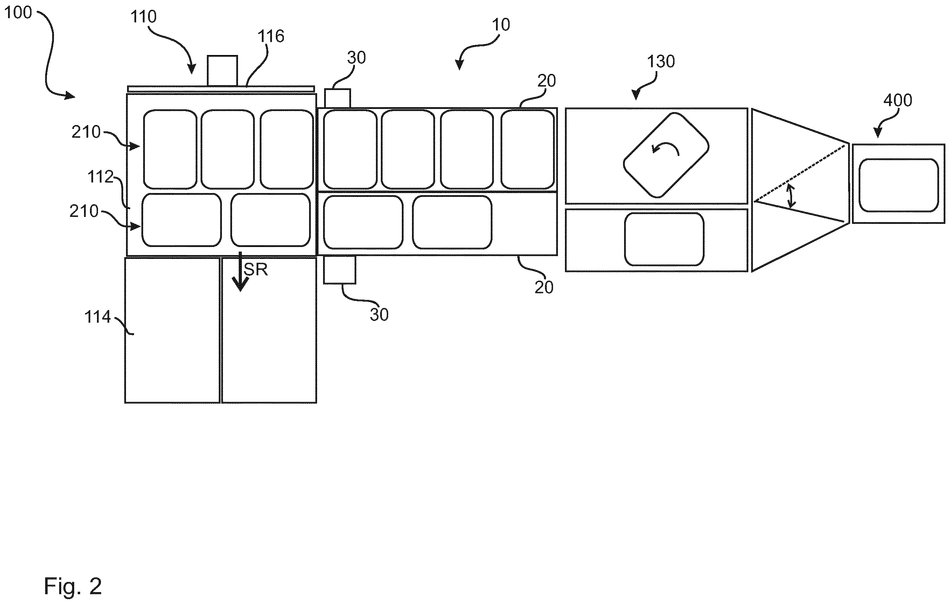

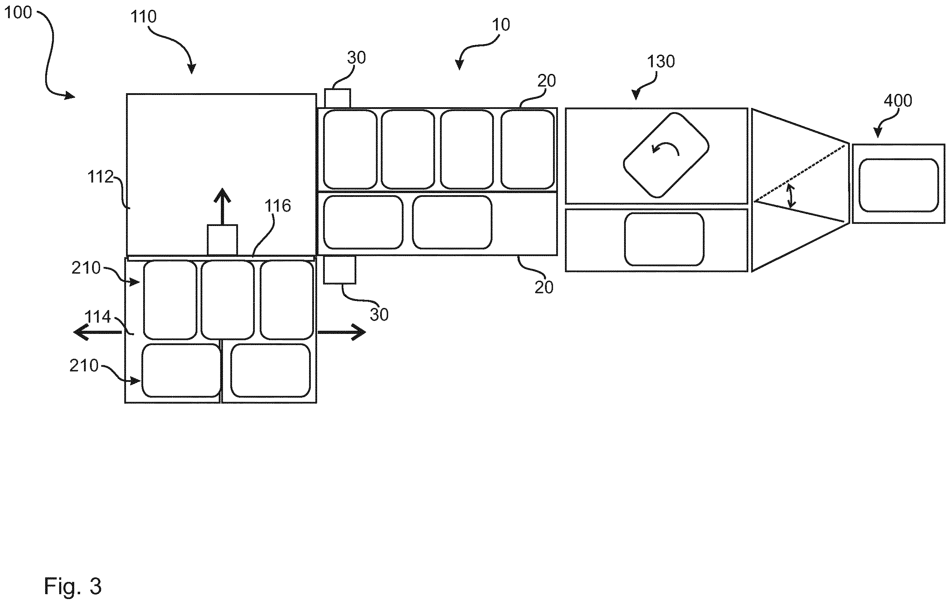

Die Fig. 2 und 3 zeigen die vorangehenden Schritte. So wird ausgehend von einer Herstellvorrichtung 400 in der Palettiervorrichtung 100 eine Vielzahl von gefüllten Säcken zur Verfügung gestellt. Dabei kann die Herstellvorrichtung z. B. als sogenannte Form-Fill-and-Seal-Maschine gefüllte Säcke 200 erzeugen. Über eine schematisch dargestellte Weiche kann mithilfe einer Drehvorrichtung 130 eine Veränderung der Rotationsausrichtung der gefüllten Säcke 200 erfolgen. Damit lassen sich unterschiedliche Lagebilder für unterschiedliche Lageausrichtungen der Lagen 230 erzielen. Außerhalb bzw. nachfolgend der Drehvorrichtung 130 ist eine Zufuhrvorrichtung 10 mit hier zwei Zufuhrbändern 20 mit separaten Antriebsvorrichtungen 30 vorgesehen. Die Zufuhr erfolgt hier in zwei gleichzeitigen Reihen 210, so dass auch die Lage 230 mit zwei Reihen 210 der gefüllten Säcke 200 ausgebildet ist. Die Ausbildung der Lage erfolgt dabei auf der Schiebefläche 112.

Sobald sich die Lage 230 auf der Schiebefläche 112 ausgebildet hat, kann mithilfe des Schiebers 116 nun die gesamte Lage 230 entlang der Schieberichtung SR von der Schiebefläche 112 auf den Schiebetisch 114 geschoben werden. Das Ende dieser Schiebebewegung ist in Fig. 3 dargestellt. Ab hier kann durch das Öffnen des Schiebetisches 114 nun das Aufstapeln erfolgen, wie es bereits mit Bezug auf Fig. 1 näher erläutert worden ist.

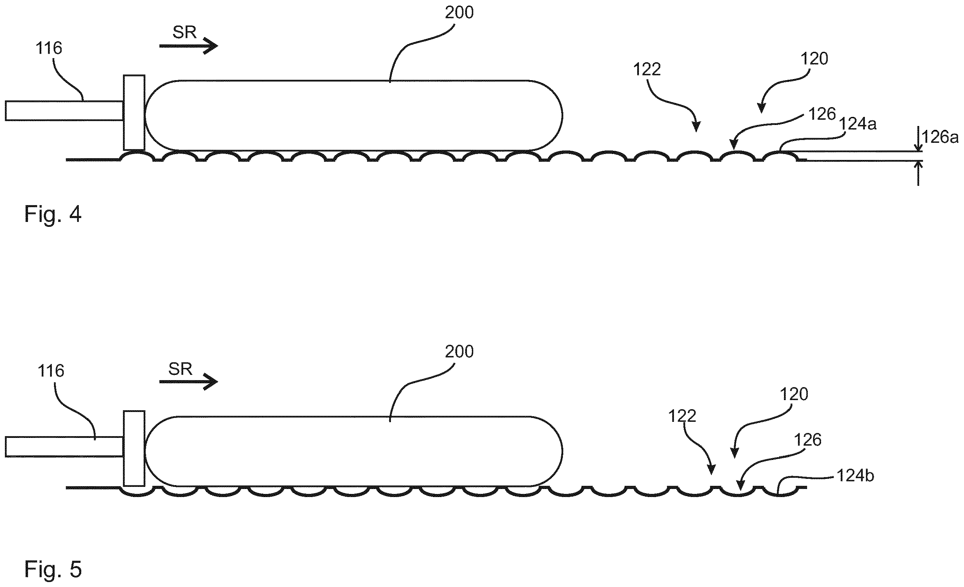

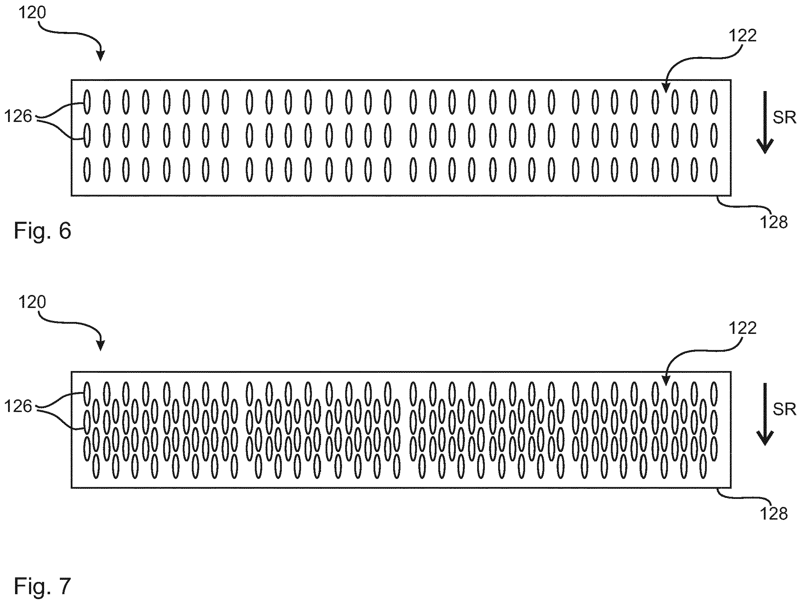

Für die Schiebebewegung der Lage 230, wie sie zwischen Fig. 2 und Fig. 3 ausgeführt wird, muss eine Bewegung der gefüllten Säcke 200 erfolgen. Dabei gleiten die gefüllten Säcke 200 entlang der Schiebefläche 112 und entlang des Schiebetisches 114. Ferner ist nun zumindest im Bereich der Schiebefläche 112 ein Strukturabschnitt 120 vorgesehen. Selbstverständlich kann auch der Schiebetisch 114 einen oder mehrere entsprechende Strukturabschnitte 120 aufweisen. Auf Figur 7 ist eine Ausführungsform eines Strukturabschnitts einer erfindungsgemäßen Schiebevorrichtung näher erläutert. Fig. 4 zeigt eine erste Möglichkeit, einen Strukturabschnitt 120 auszubilden. Hier sind die einzelnen Strukturelemente 126 als Erhebungen 124a ausgebildet, welche damit eine dreidimensionale Oberflächenstruktur 122 mit einer Strukturhöhe 126a ergeben. Bei dieser Ausführungsform ist die Strukturhöhe 126a konstant. Wie seitlich zu erkennen ist, kann mithilfe des Schiebers 116 entlang der Schieberichtung SR nun der gefüllte Sack 200 nach rechts bewegt werden. Im Gegensatz zu einer ebenen Fläche reduziert sich durch die Strukturelemente 126 nun die tatsächliche Kontaktfläche zum gefüllten Sack 200. Damit reduziert sich auch der Widerstand durch entsprechende Reibung. Da sich darüber hinaus ein statisches bzw. passives Luftpolster zwischen dem Strukturabschnitt 120, nämlich dem Talbereich, und dem gefüllten Sack 200 ausbildet, wird das Schieben hinsichtlich der notwendigen Schiebekraft noch weiter erleichtert.

Fig. 5 zeigt in schematisch seitlicher Darstellung eine ähnliche Ausführungsform zu Fig. 4. Jedoch ist hier der Strukturabschnitt 120 mit einer Oberflächenstruktur 122 mit einer Vielzahl von Vertiefungen 124b ausgebildet. Jede dieser Vertiefungen 124b bildet demnach ein einzelnes Strukturelement 126 aus. In gleicher Weise, wie dies zur Fig. 4 bereits erläutert worden ist, wird jedoch auch hier die Widerstandskraft durch Reduktion der Kontaktfläche und durch Ausbilden eines statischen bzw. passiven Luftpolsters reduziert.

In Fig. 6 ist dargestellt, wie in Draufsicht auf einen Strukturabschnitt 120 über die gesamte Schiebebreite SB eine entsprechende Ausbildung des Strukturabschnittes 120 erfolgen kann. So sind hier die einzelnen Strukturelemente 126 reihenförmig ausgebildet, um die entsprechende dreidimensionale Oberflächenstruktur 122 auszubilden.

Die Fig. 7 zeigt einen Strukturabschnitt einer erfindungsgemäßen Schiebevorrichtung, wobei die einzelnen Reihen der Strukturelemente 126 in Schieberichtung SR versetzt zueinander, insbesondere überlappend ausgebildet und angeordnet sind. Damit wird während des Schiebevorgangs ein unerwünschtes Absenken des gefüllten Sackes 200 wirksam vermieden, so dass die erfindungsgemäßen Vorteile noch besser zu tragen kommen.

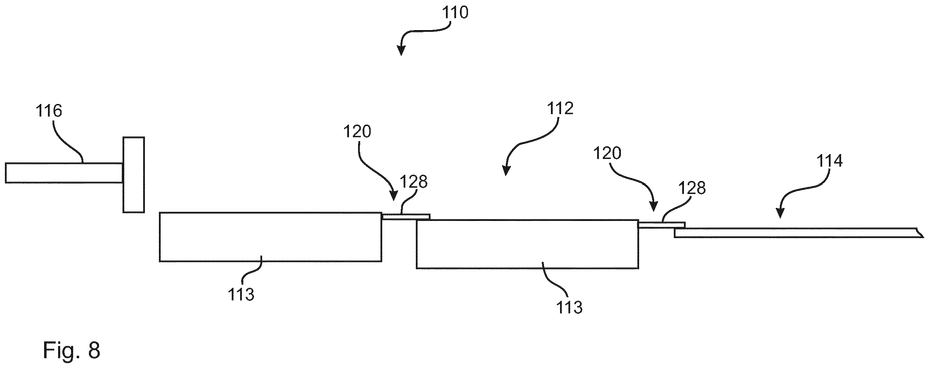

In Fig. 8 ist dargestellt, wie ein Höhenversatz während des Schiebevorgangs ausgeglichen werden kann. So sind hier im Bereich der Schiebefläche 112 zwei Schiebebänder 113 vorgesehen, um die zugeführten gefüllten Säcke 200 jeweils aus einer Zufuhrposition in eine Schiebeposition zu bewegen. Zwischen den Zufuhrbändern 113 sowie benachbart in Richtung des Schiebetisches 114 sind die Strukturabschnitte 122 als separate Strukturplatten 128 ausgebildet. Die separaten Strukturplatten 128 sind vorzugsweise auswechselbar ausgestaltet. Über den Höhenversatz kann durch die dargestellte Überlappung zusätzlich eine Spaltbildung vermieden werden, so dass eine Klemmgefahr oder Quetschgefahr während des Schiebevorgangs vollständig vermieden werden kann.

Die voranstehende Erläuterung der Ausführungsformen beschreibt die vorliegende Erfindung ausschließlich im Rahmen von Beispielen.

### Bezugszeichenliste

- 10: Zufuhrvorrichtung
- 20: Zufuhrband
- 30: Antriebsvorrichtung

- 100: Palettiervorrichtung
- 110: Schiebevorrichtung
- 112: Schiebefläche
- 113: Schiebeband
- 114: Schiebetisch
- 116: Schieber
- 120: Strukturabschnitt
- 122: Oberflächenstruktur
- 124a: Erhebung
- 124b: Vertiefung
- 126: Strukturelement
- 126a: Strukturhöhe
- 128: Strukturplatte
- 130: Drehvorrichtung
- 140: Hubvorrichtung

- 200: Sack
- 210: Reihe
- 230: Lage
- 240: Sackstapel

- 300: Palette
- 400: Herstellvorrichtung

- SR: Schieberichtung
- SB: Schiebebreite

## Patentansprüche

1. Schiebevorrichtung (110) für eine Palettiervorrichtung (100) zum Stapeln gefüllter Säcke (200) zu einem Sackstapel (240), aufweisend eine Schiebefläche (112) und einen neben der Schiebefläche (112) angeordneten Schiebetisch (114), wobei die Schiebefläche (112) zumindest einen Strukturabschnitt (120) aufweist mit einer dreidimensionalen Oberflächenstruktur (122) zur Reduktion der Reibung beim Schieben der Säcke (200), wobei die dreidimensionale Oberflächenstruktur (122) eine Oberfläche des Strukturabschnittes ist, welche durch Erhebungen oder Vertiefungen eine dreidimensionale Ausprägung aufweist, **dadurch gekennzeichnet, dass** die Vielzahl von Strukturelementen (126) zueinander in Schieberichtung (SR) des Schiebers (116) versetzt zueinander angeordnet sind, wobei die einzelnen Strukturelemente (126) quer zur Schieberichtung (SR) in Reihen ausgeführt sind, wobei die nachfolgende Reihe einen Versatz in Schieberichtung (SR) aufweist, und dass die Schiebevorrichtung ferner einen Schieber (116) für ein Schieben der Säcke (200) von der Schiebefläche (112) auf den Schiebetisch (114) aufweist.

2. Schiebevorrichtung (110) nach Anspruch 1,
**dadurch gekennzeichnet, dass**
der zumindest eine Strukturabschnitt (120) sich über die gesamte Schiebebreite (SB) erstreckt.

3. Schiebevorrichtung (110) nach einem der vorangegangenen Ansprüche,
**dadurch gekennzeichnet, dass**
der Schiebetisch (114) zumindest einen Strukturabschnitt (120) aufweist.

4. Schiebevorrichtung (110) nach einem der vorangegangenen Ansprüche,
**dadurch gekennzeichnet, dass**
die Schiebefläche (112) wenigstens ein Schiebeband (113) aufweist, wobei der zumindest eine Strukturabschnitt (120) benachbart in Schieberichtung (SR) des Schiebers (116) neben dem Schiebeband (113) angeordnet ist.

5. Schiebevorrichtung (110) nach einem der vorangegangenen Ansprüche,
**dadurch gekennzeichnet, dass**
der zumindest eine Strukturabschnitt (120) Erhebungen (124a) und/oder Vertiefungen (124b) aufweist, insbesondere in geprägter Weise.

6. Schiebevorrichtung (110) nach Anspruch 1,
**dadurch gekennzeichnet, dass**
die Vielzahl von Strukturelementen (126) unterschiedliche Strukturhöhen (126a) aufweisen.

7. Schiebevorrichtung (110) nach einem der vorangegangenen Ansprüche,
**dadurch gekennzeichnet, dass**
der zumindest eine Strukturabschnitt (120) als separate Strukturplatte (128) der Schiebefläche (112) ausgebildet ist.

8. Schiebevorrichtung (110) nach einem der vorangegangenen Ansprüche,
**dadurch gekennzeichnet, dass**
zwischen der Schiebefläche (112) und dem Schiebetisch (114) ein Höhenversatz besteht, welcher insbesondere stufenweise durch den zumindest einen Strukturabschnitt (120) überwunden wird.

## Claims

1. A sliding device (110) for a palletizing device (100) for the stacking of filled sacks (200) into a stack of sacks (240), having a sliding surface (112) and a sliding table (114) arranged next to the sliding surface (112), wherein the sliding surface (112) has at least one structural section (120) with a three-dimensional surface structure (122) for the reduction of the friction during the sliding of the sacks (200), wherein the three-dimensional surface structure (122) is a surface of the structural section, which has a three-dimensional shape due to elevations or recesses,
**characterized in that**
the plurality of structural elements (126) are arranged relative to each other offset to each other in the sliding direction (SR) of the slider (116), wherein the individual structural elements (126) are arranged in rows transversely to the sliding direction (SR), wherein the subsequent row has an offset in the sliding direction (SR), and that the sliding device additionally has a slider (116) for a sliding of the sacks (200) from the sliding surface (112) onto the sliding table (114).

2. A sliding device (110) according to Claim 1,
**characterized in that**
the at least one structural section (120) extends over the entire sliding width (SB).

3. A sliding device (110) according to any one of the preceding claims, **characterized in that**
the sliding table (114) has at least one structural section (120).

4. A sliding device (110) according to any one of the preceding claims,
**characterized in that**
the sliding surface (112) has at least one sliding strip (113), wherein the at least one structural section (120) is arranged adjacently in the sliding direction (SR) of the slider (116) next to the sliding strip (113).

5. A sliding device (110) according to any one of the preceding claims,
**charactrerized in that**
the at least one structural section (120) has elevations (124a) and/or recesses (124b), in particular in an embossed manner.

6. A sliding device (110) according to Claim 1,
**characterized in that**
the plurality of structural elements (126) have different structural heights (126a).

7. A sliding device (110) according to any one of the preceding claims,
**characterized in that**
the at least one structural section (120) is designed as a separate structural plate (128) of the sliding surface (112).

8. A sliding device (110) according to any one of the preceding claims,
**characterized in that**
between the sliding surface (112) and the sliding table (114) there is an offset in height, which is overcome in particular in a stepwise manner by the at least one structural section (120).

## Revendications

1. Dispositif de poussée (110) pour un dispositif de palettisation (100) pour l'empilement de sacs remplis (200) en une pile de sacs (240), comprenant une surface de poussée (112) et une table de poussée (114) disposée à proximité de la surface de poussée (112), la surface de poussée (112) présentant au moins une portion structurée (120) avec une structure de surface tridimensionnelle (122) permettant la réduction de la friction lors de la poussée des sacs (200), la structure de surface tridimensionnelle (122) étant une surface de la portion structurée qui présentant une forme tridimensionnelle constituée de saillies ou de creux,
**caractérisé en ce que**
la pluralité d'éléments structurés (126) sont disposés de manière décalée entre eux dans la direction de poussée (SR) du poussoir (116), les différents éléments structurés (126) étant réalisés par rangées transversalement par rapport à la direction de poussée (SR), la rangée suivante présentant un décalage dans la direction de poussée (SR), et **en ce que** le dispositif de poussée comprend en outre un poussoir (116) pour la poussée des sacs (200) de la surface de poussée (112) vers la table de poussée (114).

2. Dispositif de poussée (110) selon la revendication 1,
**caractérisé en ce que**
l'au moins une portion structurée (120) s'étend sur toute la largeur de poussée (SB).

3. Dispositif de poussée (110) selon l'une des revendications précédentes,
**caractérisé en ce que**
la table de poussée (114) comprend au moins une portion structurée (120).

4. Dispositif de poussée (110) selon l'une des revendications précédentes,
**caractérisé en ce que**
la surface de poussée (112) comprend au moins une bande de poussée (113), l'au moins une portion structurée (120) étant disposée à proximité, dans la direction de poussée (SR) du poussoir (116), à côté de la bande de poussée (113).

5. Dispositif de poussée (110) selon l'une des revendications précédentes,
**caractérisé en ce que**
l'au moins une portion structurée (120) comprend des saillies (124a) et/ou des ceux (124b), plus particulièrement de manière gaufrée.

6. Dispositif de poussée (110) selon la revendication 1,
**caractérisé en ce que**
la pluralité d'éléments structurés (126) présentent différents hauteurs de structures (126a).

7. Dispositif de poussée (110) selon l'une des revendications précédentes,
**caractérisé en ce que**
l'au moins une portion structurée (120) est conçue comme une plaque structurée (128) distincte de la surface de poussée (112).

8. Dispositif de poussée (110) selon l'une des revendications précédentes,
**caractérisé en ce que**
entre la surface de poussée (112) et la table de poussée (114), il existe un décalage de hauteur qui est surmontée plus particulièrement graduellement par l'au moins une portion structurée (120).
